# EUROPÄISCHE PATENTANMELDUNG

(11) **EP 0 575 795 A1**
(43) Veröffentlichungstag der Anmeldung: **29.12.1993**
(21) Anmeldenummer: 93109006.2
(22) Anmeldetag: 04.06.1993
(51) Int. Cl.: B23K 31/00

(54) **Wandung aus wenigstens zwei Wandungsteilen**

(30) Priorität: 23.06.1992 DE 4220340
(71) Anmelder: RATIONAL GmbH, D-86899 Landsberg (DE)
(72) Erfinder: Laschütza, Friedhelm, W-8921 Kinsau (DE); Durth, Wilfried, W-8910 Lansberg/Lech (DE); Srugies, Horst, W-8933 Obermeitigen (DE); Rieger, Manfred, W-8910 Landsberg/Lech (DE)
(74) Vertreter: Goddar, Heinz J., Dr.

(57) **Zusammenfassung**

Eine Wandung aus wenigstens zwei Wandungsteilen (1,2), die im wesentlichen fugenlos miteinander zu verbinden sind, wobei als Verbindung eine Schweißnaht (4) oder dergleichen an einer Anstoßkante der Wandungsteile vorgesehen ist und wobei an zumindest einem der Wandungsteile eine Ansatzfläche (5) für das andere Wandungsteil ausgebildet ist, ist dadurch gekennzeichnet, daß die Ansatzfläche (5) sich zumindest im Bereich der Schweißnaht (4) im wesentlichen parallel zu einer Tangentialebene an die Wandungsteile (1,2) die die Anstoßkante enthält, erstreckt. Alternativ ist an zumindest einem der Wandungsteile (1 od. 2) eine Ansatzfläche (6 od. 7) für das andere Wandungsteil ausgebildet, welche sich zumindest im Bereich der Schweißnaht (4) im wesentlichen senkrecht zu einer Tangentialebene an die Wandungsteile (1,2), die die Anstoßkante (6,7) enthält, erstreckt, wobei beabstandet von der Anstoßkante eine weitere Schweißnaht (15) an wenigstens einer der Ansatzflächen vorgesehen ist.

## Beschreibung

Die Erfindung betrifft eine Wandung aus wenigstens zwei Wandungsteilen, die im wesentlichen fugenlos miteinander zu verbinden sind, wobei als Verbindung eine Schweißnaht oder dergleichen an einer Anstoßkante der Wandungsteile vorgesehen ist undwobei an zumindest einem der Wandungsteile eine Ansatzfläche für das andere Wandungsteil ausgebildet ist.

In der Großküchentechnik hat es sich in den letzten Jahren immer mehr durchgesetzt, zum Aufbewahren, Warmhalten oder Garen von Speisen Behälter bzw. Garräume in sogenannter Hygiene-Ausführung zu verwenden, wobei deren Wandungsteile, im allgemeinen Decken-, Boden- und Seitenbleche, fugenlos miteinander verschweißt sind.

Neben verschiedenen Ansätzen eines "quasi-fugenfreien" Behälters oder Garraumes, die beispielsweise durch Überlappen der Bleche in den Anschlußbereichen hergestellt werden, wird bisher für die Serienproduktion nahezu ausschließlich eine Ausführung einer Schweißnaht verwendet, bei der nämlich die Bleche stumpf miteinander verschweißt werden. Diese Nahtform macht allerdings bei der industriellen Fertigung sehr große Schwierigkeiten, da höchste Anforderungen an Toleranzen der Bleche an der Anstoßkante sowie an die Paßgenauigkeit gestellt werden und gleichzeitig ein beträchtlicher Aufwand zum immer erforderlichen Spannen der Bleche betrieben werden muß. Werden wärmeableitende Mittel wie Kupferschienen angebracht, ist der dafür erforderliche konstruktive und apparative Aufwand ebenfalls ausgesprochen hoch.

Auch ist eine Wandung bekannt geworden, bei der die Wandungsteile an Ansatzflächen, die in der Ebene der Fuge Zwischen den Wandungsteilen vorgesehen sind, aneinandergelegt und dann wiederum an der Anstoßkante miteinander verschweißt werden. Obwohl der Fertigungsaufwand für diese Wandung deutlich geringer ist, kann insbesondere eine Kippstabilität im Bereich der Fuge bzw. Schweißnaht nicht zuverlässig gewährleistet werden, da die verarbeiteten Bleche im Regelfall dünne Bleche sind.

Es ist die Aufgabe der Erfindung, eine fugenfreie Wandung zu schaffen, die produktionstechnisch einfach und wenig aufwendig herzustellen ist, die stabil ist und die auch den insbesondere im Lebensmittelbereich gestellten hygienischen Anforderungen genügt, wobei die Möglichkeit bestehen soll, eventuell Zusätzlich erforderliche Vorrichtungen temporär oder dauerhaft anzubringen.

Diese Aufgabe wird von einer Wandung nach Patentanspruch 1 oder Patentanspruch 2 gelöst. Vorteilhafte Ausgestaltungen sind Gegenstand der Unteransprüche.

Erfindungsgemäß ist einerseits vorgesehen, daß die Ansatzfläche sich zumindest im Bereich der Schweißnaht im wesentlichen parallel zu einer Tangentialebene an die Wandungsteile, die die Anstoßkante enthält, erstreckt. Es ist damit nicht nur möglich, die Wandungsteile in bezug auf einander auf einfachste Weise paßgenau miteinander auszurichten, da durch die vertikale Anlage des Wandungsteiles sozusagen eine Selbstzentrierung erfolgt, wobei auch die eventuell beim Schweißen auftretenden thermischen Spannungen wirkungsvoll neutralisiert werden, es können auch gegebenenfalls notwendige Vorrichtungen an einem der Wandungsteile angebracht werden, sie sind dann ohne weitere Maßnahmen auch relativ zu dem anderen Wandungsteil in der richtigen Lage. Eine geeignete Ausgestaltung der Ansatzfläche kann dabei optimale Anbringungsmöglichkeiten für derartige Vorrichtungen schaffen. Zudem ist gleichzeitig die Stabilität, insbesondere die Kippstabilität gegeben.

Andererseits ist ebenfalls erfindungsgemäß vorgesehen, daß bei einer Wandung aus wenigstens zwei Wandungsteilen, die im wesentlichen fugenlos miteinander zu verbinden sind, wobei als Verbindung eine Schweißnaht oder dergleichen an einer Anstoßkante der Wandungsteile vorgesehen ist und wobei an zumindest einem der Wandungsteile eine Ansatzfläche für das andere Wandungsteil ausgebildet ist, welche sich zumindest im Bereich der Schweißnaht im wesentlichen senkrecht zu einer Tangentialebene an die Wandungsteile, die die Anstoßkante enthält, erstreckt, beabstandet von der Anstoßkante eine weitere Schweißnaht an beispielsweise zweien der Ansatzflächen vorgesehen ist. Diese Schweißnaht, bei zwei Flanschen bevorzugt eine Rollnaht, stabilisiert die Wandung gleichfalls, wobei die zuvor genannten Vorteile erhalten bleiben. Insbesondere wird die Fuge zwischen den Wandungsteilen auch hier hygienisch durch eine Schweißnaht verschlossen.

Das Anbringen von Vorrichtungen und Mitteln wird weiter vereinfacht, wenn wenigstens eines der Wandungsteile einen von dem Wandungsteil abgekanteten Flansch aufweist. Oftmals werden auch die Flansche allein für eine ausreichende Ableitung der Wärme sorgen.

Bevorzugt ist, daß sich der Flansch im wesentlichen senkrecht zum jeweiligen Wandungsteil im Bereich der Schweißnaht erstreckt.

Weiter bevorzugt ist die Ansatzfläche am Flansch vorgesehen.

Zusätzlich kann wenigstens einer der Flansche unter einem Winkel zu dem jeweiligen Wandungsteil angestellt sein, wobei dieser Winkel vorteilhaft etwa 135 beträgt, was die optimale Ausbildung einer Schweißnaht im Anschlußbereich der Flansche, der der Anstoßkante entspricht, begünstigt und was auch zu optisch ansprechenden Möglichkeiten für die Gestaltung der Naht führt.

Wenn Flansche mit Ansatzflächen bei der erfindungsgemäßen Wandung vorgesehen sind, können Schweissungen nicht nur im Anschlußbereich der Flansche, sondern auch in deren Auflagebereich vorgesehen sein, wobei die letzteren dann zu einer erhöhten Stabilität der Wandung beitragen oder diese auch maßgeblich tragen, während die Naht im Anschlußbereich dann hauptsächlich dazu dient, die dort vorliegende Fuge zu verschließen. Dabei kann diese Naht durch Laserschweißen gebildet sein.

Schließlich kann auch die stabilisierende Schweißnaht an den Ansatzflächen beabstandet von der Anstoßkante durch Laserschweißen ausgebildet sein, wobei gegebenenfalls gleichzeitig die Flansche geschnitten werden.

Im folgenden soll die Erfindung beispielhaft anhand der beigefügten Zeichnungen näher beschrieben werden. Dabei zeigt
- Fig. 1: eine Wandung nach dem Stand der Technik;
- Fig. 2: eine Wandung nach einer ersten Ausführungsform der Erfindung mit nur einer Ansatzfläche;
- Fig. 3: eine Wandung nach einer zweiten Ausführungsform der Erfindung mit Ansatzflächen an jedem Wandungsteil sowie zwei Schweissungen; und
- Fig. 4: eine Wandung nach einer dritten Ausführungsform der Erfindung mit Ansatzflächen an unter einem Winkel zu den Wandungsteilen angestellten Flanschen.

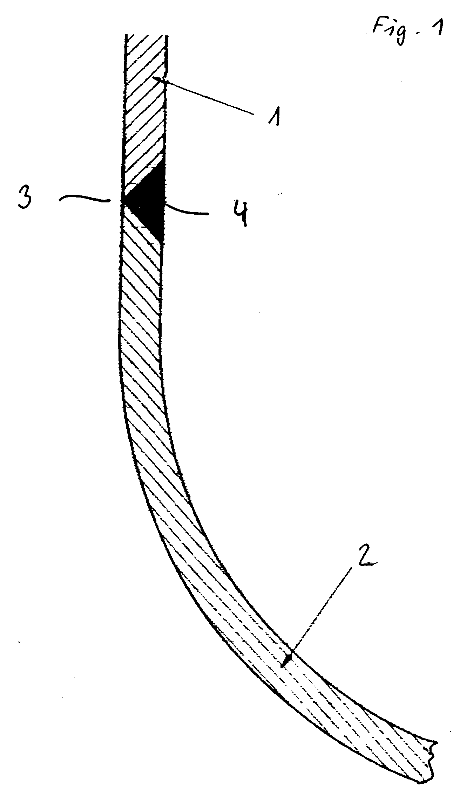

Die in Fig. 1 dargestellte Wandung besteht aus zwei Wandungsteilen, einem Mantel 1 und einem sich anschließenden Boden (oder Deckel) 2, der hier gekrümmt verlaufend dargestellt ist. Mantel 1 und Boden 2 treffen an einer Anstoßkante 3 aufeinander und werden in diesem Bereich, wenn sie genau ausgerichtet sind, durch eine Schweißnaht 4 miteinander verbunden. Die zur gleichen Seite gerichteten Flächen von Mantel 1, Boden 2 und Schweißnaht 4 fluchten miteinander, so daß hygienischen Anforderungen durch die glatte Oberfläche der Wandung genügt wird. Jedoch bestände die Gefahr, daß die einmal ausgerichteten Wandungsteile während des Schweißens verkippten, wenn sie nicht dagegen gesichert würden. Dies ist nach dem Stand der Technik, wie er hier dargestellt ist, nur mit großem Aufwand möglich.

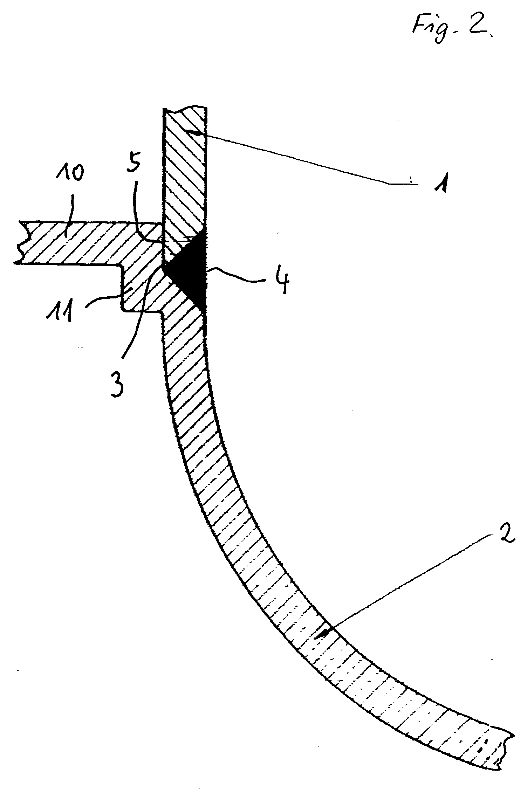

Fig. 2 zeigt eine Wandung nach einer ersten Ausführungsform der Erfindung. Eines der Wandungsteile, hier der Mantel 1, ist wie im Stand der Technik ausgebildet. Am zweiten Wandungsteil 2 ist an dessen in der Figur oberen Ende eine Stufe 11 vorgesehen, auf der ein in bezug auf die Wandung abgekanteter Flansch 10 ausgebildet ist, der sich von dem Wandungsteil über die Stufe 11 hinaus erstreckt. Der Mantel 1 liegt an einer Ansatzfläche 5, die durch eine Seitenfläche des Flansches 10 gebildet ist. Die untere Begrenzungslinie der Ansatzfläche 5 bildet die Anstoßkante 3 für den Mantel 1 entsprechend der Darstellung nach Fig. 1. Die zwischen dem Mantel 1 und der Wandungsfläche 2 angebrachte Schweißnaht 4 fluchtet wieder, wie bereits im Zusammenhang mit Fig. 1 beschrieben, so daß wieder eine glatte Wandungsfläche vorliegt. Der Flansch 10 kann eine Spannvorrichtung tragen oder wärmeableitende Mittel aufnehmen, wenn er nicht selbst zur Wärmeableitung ausreicht.

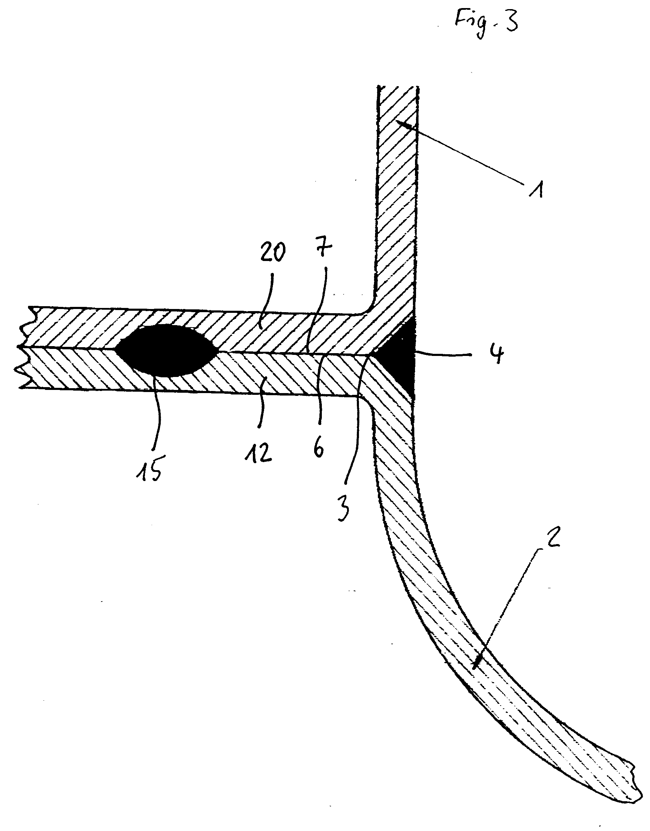

In der Ausführungsform nach Fig. 3 weisen beide Wandungsflächen 1, 2 einen Flansch 20, 12 auf, wobei zum Verschweißen die Flansche, entsprechend ausgerichtet, aufeinandergelegt werden. Die aufeinanderliegenden Flächen bilden dann jeweils die Ansatzflächen 6, 7, die in Richtung auf die Wandungsteile 1, 2 durch die Anstoßkante 3 begrenzt sind. Die tragende Schweißnaht ist hier als Verbindung zwischen den Flanschen 20, 12 beispielsweise als Rollnaht 15 ausgebildet, während die Schweißnaht 4, in der üblichen Ausgestaltung oder auch durch Laserschweißen ausgebildet, dazu dient, die Fuge zwischen den Wandungsteilen 1, 2 bzw. den Flanschen 20, 12 zu verschließen.

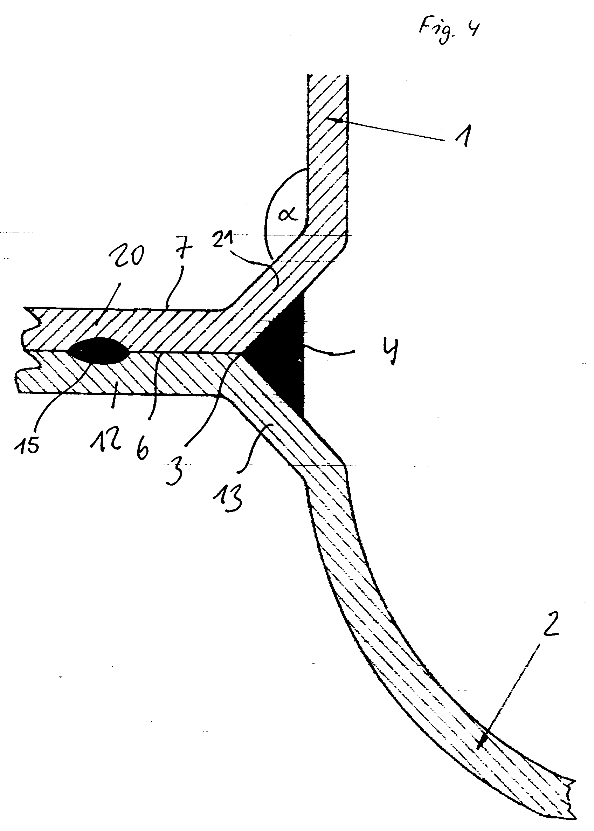

Gemäß Fig. 4 sind die Flansche 20, 12 an den Wandungsteilen 1, 2 über Zwischenstücke 21, 13 angestellt, wobei die Zwischenstücke 21, 13 jeweils unter einem Winkel o von etwa 135 zu den Wandungsteilen 1, 2 und zu den gerade verlaufenden Abschnitten der Flansche 20, 12 liegen. Die Zwischenstücke 21, 13 liegen an der Anstoßkante 3 aneinander, diese ist wieder die Begrenzung für die Ansatzflächen 6, 7 der Flansche 12, 20. Die tragende Verbindung ist wieder eine Rollnaht 15 im Bereich der Flansche 12, 20, während die Schweißnaht 4 die Funge zwischen den beiden Wandungsteilen verschließt, sie füllt aber nicht den gesamten Raum zwischen den Zwischenstücken 21, 13 aus.

Die in der vorstehenden Beschreibung, der Zeichnung sowie den Ansprüchen offenbarten Merkmale der Erfindung können sowohl einzeln als auch in beliebigen Kombinationen für die Erfindung in ihren verschiedenen Ausführungsformen wesentlich sein.

### Bezugszeichenliste

- 1: erstes Wandungsteil, Mantel
- 2: zweites Wandungsteil, Boden (Deckel)
- 3: Anstoßkante
- 4: Schweißnaht
- 5: Ansatzfläche
- 6: Ansatzfläche
- 7: Ansatzfläche
- 10: Flansch
- 11: Stufe
- 12: Flansch
- 13: Zwischenstück
- 15: Rollnaht
- 20: Flansch
- 21: Zwischenstück

## Patentansprüche

1. Wandung aus wenigstens zwei Wandungsteilen, die im wesentlichen fugenlos miteinander zu verbinden sind, wobei als Verbindung eine Schweißnaht oder dergleichen an einer Anstoßkante der Wandungsteile vorgesehen ist und wobei an zumindest einem der Wandungsteile eine Ansatzfläche für das andere Wandungsteil ausgebildet ist,
**dadurch gekennzeichnet**, daß die Ansatzfläche (5) sich zumindest im Bereich der Schweißnaht (4) im wesentlichen parallel zu einer Tangentialebene an die Wandungsteile (1, 2), die die Anstoßkante (3) enthält, erstreckt.

2. Wandung aus wenigstens zwei Wandungsteilen, die im wesentlichen fugenlos miteinander zu verbinden sind, wobei als Verbindung eine Schweißnaht oder dergleichen an einer Anstoßkante der Wandungsteile vorgesehen ist und wobei an zumindest einem der Wandungsteile eine Ansatzfläche für das andere Wandungsteil ausgebildet ist, welche sich zumindest im Bereich der Schweißnaht im wesentlichen senkrecht zu einer Tangentialebene an die Wandungsteile, die die Anstoßkante enthält, erstreckt,
**dadurch gekennzeichnet**, daß beabstandet von der Anstoßkante (3) eine weitere Schweißnaht (15) an wenigstens einer der Ansatzflächen (6, 7) vorgesehen ist.

3. Wandung nach Anspruch 1 oder 2, dadurch gekennzeichnet, daß wenigstens eines der Wandungsteile (1, 2) einen von dem Wandungsteil abgekanteten Flansch (10, 12, 20) aufweist.

4. Wandung nach Anspruch 3, dadurch gekennzeichnet, daß sich der Flansch (10, 12, 20) im wesentlichen senkrecht zum jeweiligen Wandungsteil (1, 2) im Bereich der Schweißnaht (4) erstreckt.

5. Wandung nach Anspruch 3 oder 4, dadurch gekennzeichnet, daß die jeweilige Ansatzfläche (5, 6, 7) an einem der Flansche (10, 12, 20) ausgebildet ist.

6. Wandung nach einem der Ansprüche 3 bis 5, dadurch gekennzeichnet, daß wenigstens einer der Flansche (12, 20) unter einem Winkel (α) zu dem jeweiligen Wandungsteil (1, 2) angestellt ist.

7. Wandung nach Anspruch 6, dadurch gekennzeichnet, daß die Größe des Winkels (α) etwa 135° beträgt.

8. Wandung nach Anspruch 2, dadurch gekennzeichnet, daß die Schweißnaht (15) eine Rollnaht ist.

9. Wandung nach einem der Ansprüche 1 bis 8, dadurch gekennzeichnet, daß die Schweißnaht (4) durch Laserschweißen gebildet ist.

10. Wandung nach Anspruch 2, dadurch gekennzeichnet, daß die Schweißnaht (15) durch Laserschweißen, gegebenenfalls mit gleichzeitigem Schneiden der Flansche, gebildet ist.
